# FASCICULE DE BREVET EUROPEEN

(11) **EP 2 623 439 B1**
(45) Date de publication et mention de la délivrance du brevet: **04.03.2015**
(21) Numéro de dépôt: 12306632.6
(22) Date de dépôt: 20.12.2012
(51) Int. Cl.: B65G 23/30, B65G 17/20

(54) **Convoyeur à chaîne déformable entre une configuration étirée et une configuration compactée**
Verformbares Fließband zwischen einer gezogenen Konfiguration und einer komprimierten Konfiguration
Chain conveyor deformable between an extended configuration and a compacted configuration

(30) Priorité: 01.02.2012 FR 1250933
(43) Date de publication de la demande: 07.08.2013
(73) Titulaire: SIDEL PARTICIPATIONS, 76930 Octeville-sur-Mer (FR)
(72) Inventeur: Lahogue, Yoann, 76930 OCTEVILLE SUR MER (FR); Danel, Laurent, 76930 OCTEVILLE SUR MER (FR); Cirette, Damien, 76930 OCTEVILLE SUR MER (FR); Bellec, Caroline, 76930 OCTEVILLE SUR MER (FR); Santais, Franck, 76930 OCTEVILLE SUR MER (FR); Maillot, Isabelle, 76930 OCTEVILLE SUR MER (FR); Feuilloley, Guy, 76930 OCTEVILLE SUR MER (FR)
(74) Mandataire: Louiset, Raphael

(56) Documents cités:
- WO-A1-95/21546
- US-A- 2 487 354

## Description

L'invention a trait au convoyage des articles, notamment des corps creux tels que des récipients, ou encore des préformes en matière plastique à partir desquelles sont formés des récipients, par exemple par soufflage ou étirage soufflage.

Plus précisément, l'invention concerne un convoyeur d'articles du type à chaîne de transport déformable entre une configuration étirée pour le transport des articles selon un premier écartement, et une configuration compactée pour le transport des articles selon un second écartement, qui peut être inférieur au premier.

Ce type de convoyeur est connu de longue date pour des applications dans lesquelles on souhaite opérer une diminution locale de la vitesse de transport des articles sans variation de la vitesse d'entraînement de la chaîne.

Ainsi, le brevet américain US 2 487 354 (Anchor Hocking Glass, 1949) décrit un convoyeur de récipients en verre destinés à subir localement un traitement thermique.

Ce convoyeur est équipé d'une chaîne formée de maillons, cette chaîne adoptant une configuration étirée dans une première section de guidage étroite, dans laquelle les maillons s'étendent en ligne pour former une seule rangée d'articles, et une configuration compactée dans une seconde section de guidage large, dans laquelle les maillons sont repliés en accordéon pour former localement deux rangées d'articles.

Dans la section large, la vitesse de défilement des récipients est divisée par deux ; les récipients y sont exposés aux flammes de becs de gaz assurant le traitement thermique (en l'espèce un polissage).

La chaîne circule en boucle fermée sur deux roues dentées, dont l'une, motrice, est entraînée en rotation par un système de vis sans fin engrenant un pignon solidaire de la roue.

Le passage de la chaîne de sa configuration étirée à sa configuration compactée s'effectue simplement par pivotement des maillons dans la section de guidage large, sous la seule poussée des maillons suivants, encore situés dans la section de guidage étroite, compte tenu de la diminution locale de la vitesse de défilement des maillons dès l'entrée de la section de guidage large.

Inversement, à la sortie de la section de guidage large, les maillons subissent la traction des maillons précédents déjà situés dans la section de guidage étroite, et qui ont recouvré une vitesse normale de défilement.

Dans ce type de convoyeur, il a été constaté qu'au-delà d'une certaine vitesse seuil des instabilités apparaissent dans les mouvements de pivotement des maillons à l'entrée de la section de guidage large, dues à l'importance croissante de la décélération subie par les maillons, qui se traduit par une augmentation de la poussée à laquelle les maillons sont soumis. Compte tenu de leur disposition en accordéon, les maillons exercent sur les surfaces latérales de la section de guidage large des efforts croissants, proportionnels à la poussée qu'ils subissent. Ces efforts génèrent une usure accrue des surfaces en contact, et peuvent conduire à un freinage, voire à un coincement de la chaîne dans la section de guidage large.

Ce type de convoyeur n'est par conséquent adapté qu'à des applications où les cadences de production demeurent faibles, typiquement le polissage de récipients en verre évoqué par le document US 2 487 354 précité. On observera d'ailleurs que le système d'entraînement par vis sans fin ne permet pas de faire tourner la roue motrice à des vitesses élevées.

En revanche ce type de convoyeur n'est pas adapté à des applications où les cadences de production sont élevées, typiquement dans le convoyage de préformes en matière plastique pour la fabrication de récipients, dans lesquelles les cadences peuvent atteindre ou dépasser 50 000 unités par heure.

Un objectif est par conséquent de proposer une solution de convoyage permettant de transporter des articles en en faisant varier localement l'écartement (par exemple sur plusieurs rangées), qui puisse fonctionner de manière fiable à cadence élevée.

A cet effet, il est proposé un convoyeur d'articles à chaîne de transport déformable entre une configuration étirée pour le transport des articles selon un premier écartement, et une configuration compactée pour le transport des articles selon un deuxième écartement, la chaîne étant formée d'une pluralité de maillons articulés, chaque maillon comprenant :
- un chariot muni de moyens de guidage latéral coopérant avec une piste définissant une trajectoire prédéterminée ;
- un support définissant un axe d'orientation, ce support étant monté mobile en rotation par rapport au chariot autour d'un axe principal entre une position droite correspondant à la configuration déployée de la chaîne, et une position oblique, correspondant à la position compactée de la chaîne et dans laquelle l'axe d'orientation est incliné par rapport à la position droite, le support portant au moins un embout pour la fixation amovible d'un article ;
- un actionneur couplé au support, propre à entraîner celui-ci en rotation de sa position droite à sa position oblique, et réciproquement.

Grâce au découplage entre le chariot d'une part, le support et l'actionneur d'autre part, il est possible de diminuer la masse du maillon mobile en rotation, et donc de diminuer son inertie. Il en résulte une diminution des efforts induits par la chaîne sur les surfaces de guidage, et donc une diminution de l'usure ainsi qu'une augmentation potentielle de la vitesse de diminution de la chaîne, au bénéfice des cadences de production.

Diverses caractéristiques supplémentaires peuvent être prévues, seules ou en combinaison :
- l'actionneur se présente sous forme d'un levier solidaire en rotation du support, ce levier étant articulé par rapport au chariot entre une position repliée correspondant à la position droite du support, et une position déportée correspondant à la position oblique du support ;
- le levier porte un suiveur de came apte à coopérer avec un chemin de came formant une chicane ayant une entrée où le levier est placé en position repliée, et une sortie où le levier est placé en position déportée ;
- l'actionneur est monté à une extrémité d'un arbre central monté en rotation par rapport au chariot, et le support est monté à une extrémité opposée de l'arbre central ;
- l'embout est décalé par rapport à l'axe principal suivant l'axe d'orientation ;
- chaque maillon est relié au maillon adjacent par au moins une biellette ;
- le chariot comprend un corps central, et les moyens de guidage latéral se présentent sous forme de galets montés sur des bras de guidage latéral faisant saillie du corps ;
- le chariot comprend deux bras de guidage latéral diamétralement opposés ;
- le support porte au moins deux embouts pour la fixation amovible d'un article sur chaque embout ;
- le support se présente sous forme d'un palonnier portant un embout à chacune de ses extrémités ;
- le chariot est muni de moyens de guidage vertical coopérant une surface support ;
- le chariot comprend un corps central, et les moyens de guidage vertical se présentent sous forme de galets montés sur des bras de guidage vertical faisant saillie du corps ;
- le convoyeur comprend en outre une paire de roues d'entraînement sur lesquelles circule la chaîne, ces roues étant synchronisées en position angulaire.

D'autres objets et avantages de l'invention apparaîtront à la lumière de la description d'un mode préféré de réalisation, faite ci-après en référence aux dessins annexés dans lesquels :
- la figure 1 est une vue en perspective montrant un convoyeur d'articles équipé d'une chaîne déformable pour le transport local des articles sur deux rangées ;
- la figure 2 est une vue partielle de dessus du convoyeur de la figure 1 ;
- la figure 3 est une vue de détail en perspective montrant le processus de déformation de la chaîne depuis sa configuration étirée vers sa configuration compactée ;
- la figure 4 est une vue de détail en perspective montrant un maillon de la chaîne de la figure 3 dans deux positions, à savoir une position droite (à gauche sur la figure) correspondant à la configuration étirée de la chaîne, et une position oblique (à droite sur la figure) correspondant à la configuration compactée de la chaîne ;
- la figure 5 est une vue de dessus de la chaîne de la figure 3, avec en encart un détail à échelle agrandie ;
- la figure 6 est une vue de dessous de la chaîne de la figure 3, avec en encart un détail à échelle agrandie.

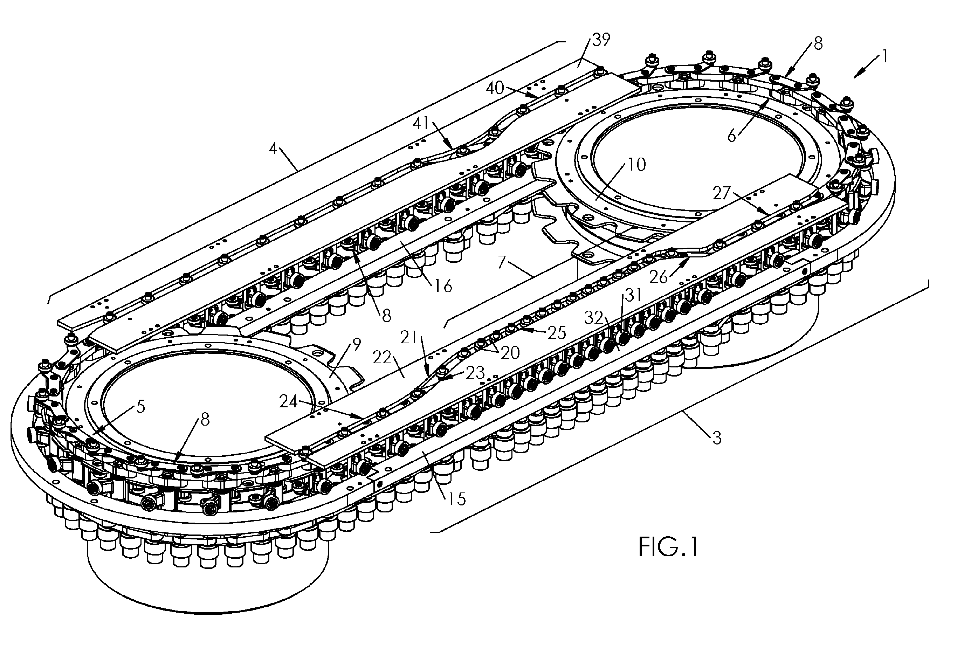

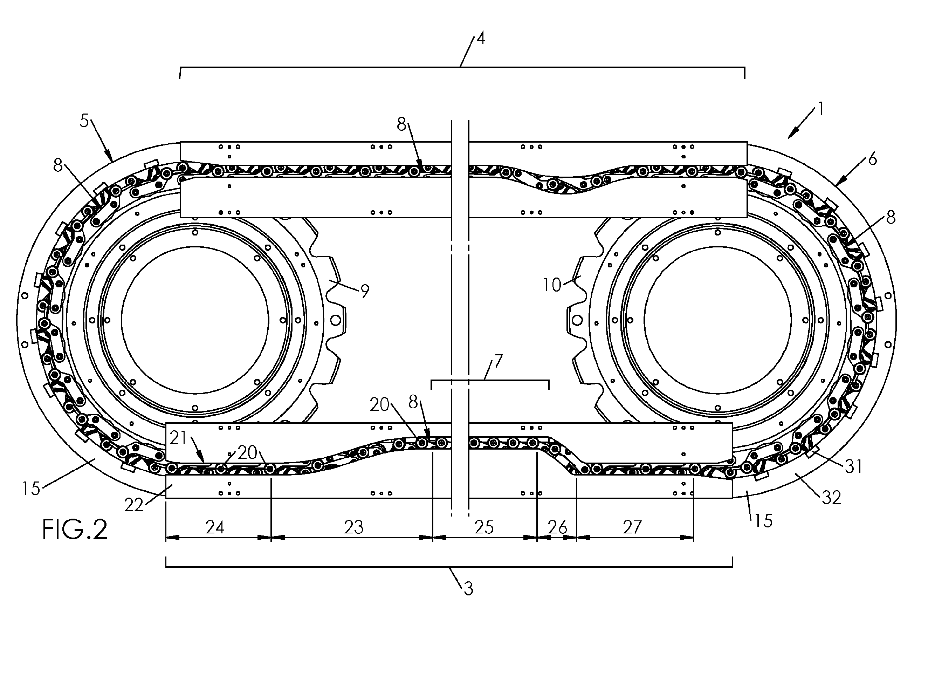

Sur les figures 1 et 2 est représenté, respectivement en perspective et en vue de dessus, un convoyeur **1** d'articles **2,** notamment des corps creux, destinés à subir, le long d'une trajectoire définie par le convoyeur **1,** une ou plusieurs opérations de transformation.

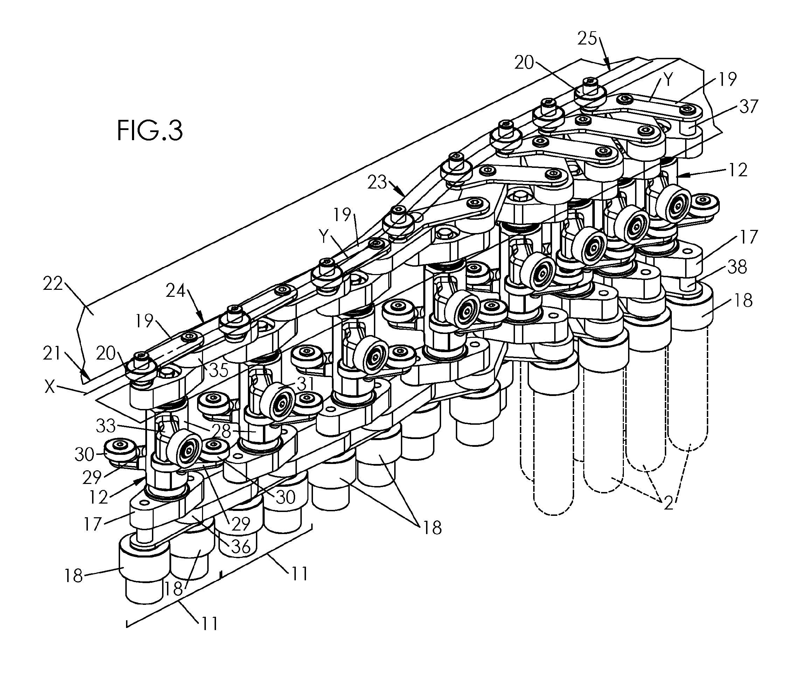

Les articles **2** sont en l'espèce, comme illustré sur la figure 3, des préformes de récipients en matière plastique, issues d'une opération de moulage par injection et destinées à subir une opération de chauffe en vue d'un formage au sein d'un moule à l'empreinte des récipients. Dans ce qui suit, on suppose par hypothèse que les articles **2** sont des préformes, mais cette hypothèse n'est pas limitative.

Selon un mode de réalisation, le convoyeur **1** présente une forme oblongue en boucle fermée avec deux brins rectilignes parallèles, à savoir un brin **3** aller et un brin **4** retour, reliées par deux retours en arc de cercle aux extrémités du convoyeur **1,** à savoir un retour **5** amont et un retour **6** aval. Cette forme n'est toutefois pas limitative.

Le brin **3** aller définit une trajectoire X rectiligne longitudinale le long de laquelle sont destinées à défiler les préformes **2.** L'opération de chauffe est en l'espèce destinée à être conduite sur une section **7** opératoire s'étendant localement le long du brin **3** aller du convoyeur **1.**

Les préformes **2** sont prises en charge par le convoyeur **1** en amont de la section **7** opératoire, en provenance d'un dispositif d'alimentation non représenté.

Pour le transport des préformes **2,** le convoyeur **1** comprend une chaîne **8** de transport sans fin déformable entre une configuration étirée pour le transport des préformes **2** avec, entre celles-ci, un premier écartement E1 maximal, et une configuration compactée pour le transport des préformes **2** avec, entre celles-ci, un deuxième écartement E2 minimal, en l'espèce inférieur au premier écartement E1, cette configuration compactée étant adoptée dans la section **7** opératoire pour augmenter la compacité des préformes **2** lors de l'opération de chauffe.

Dans l'exemple illustré, en configuration étirée de la chaîne **8** les préformes **2** sont alignées sur une rangée unique, tandis qu'en configuration compactée de la chaîne **8** les préformes **2** sont disposées en quinconce sur deux rangées (ou plus).

Comme on peut le voir sur les figures 1 et 2, dans les retours **5, 6** la chaîne **8** circule sur des roues d'entraînement, à savoir une roue **9** amont et une roue **10** aval, munies de dents périphériques engrenant la chaîne **8.**

La chaîne **8** est formée d'une pluralité de maillons **11** reliés entre eux et articulés les uns par rapport aux autres. Chaque maillon **11** est configuré pour pouvoir porter deux préformes **2,** et comprend, en premier lieu, un chariot **12** définissant un axe Z principal (en l'espèce vertical), muni de moyens de guidage latéral du maillon **11.**

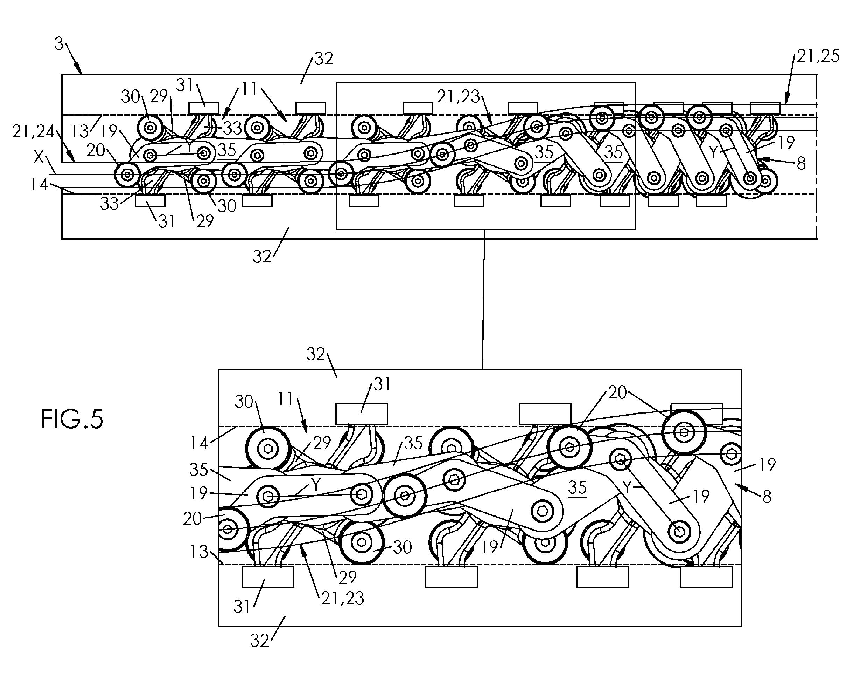

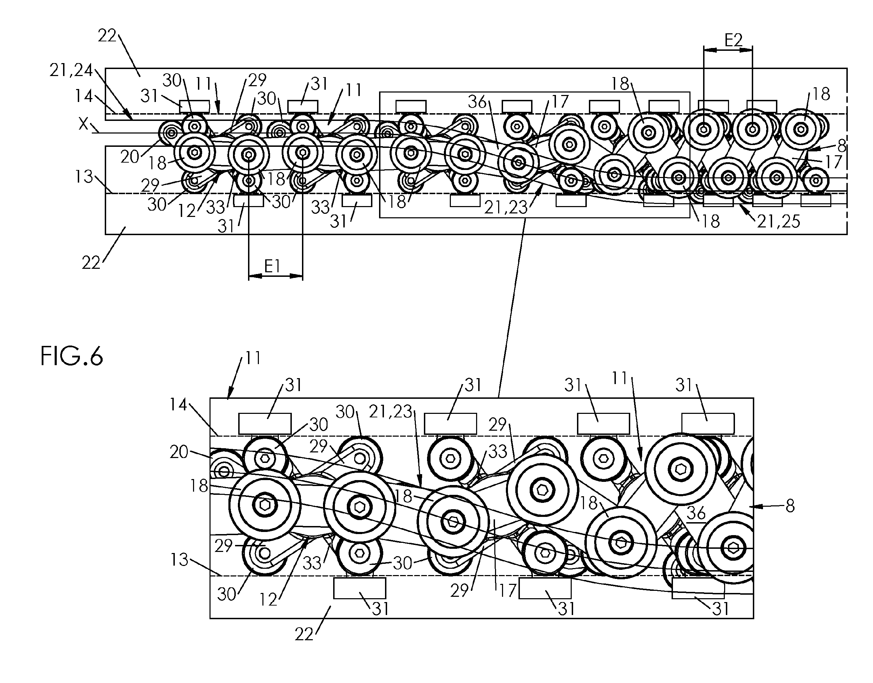

Selon un exemple de réalisation illustré sur les figures, et plus particulièrement sur les figures 5 et 6, ces moyens de guidage se présentent pour chaque maillon **11** sous forme d'au moins un galet (en l'espèce une paire de galets, qui seront décrits plus en détail ci-après). Chaque galet coopère avec une piste **13, 14** de guidage latéral définissant la trajectoire de défilement des préformes **2.** Dans les brins **3, 4** rectilignes (notamment dans le brin **3** aller), chaque piste **13, 14** de guidage latéral est plane. Dans les retours, chaque piste **13, 14** de guidage latéral est cylindrique.

Dans l'exemple illustré, et comme cela est bien visible sur la figure 1, le convoyeur **1** comprend une paire de rails **15, 16** concentriques dont des faces internes en regard, d'écartement mutuel constant, définissent les pistes **13, 14** de guidage latéral de la chaîne **8.**

Chaque maillon **11** comprend, en deuxième lieu, un support **17** définissant un axe Y d'orientation mobile et portant au moins un embout **18** pour la fixation amovible d'une préforme **2.** Selon un mode de réalisation préféré, illustré sur les figures, l'embout **18** décalé par rapport à l'axe Z principal suivant l'axe Y d'orientation.

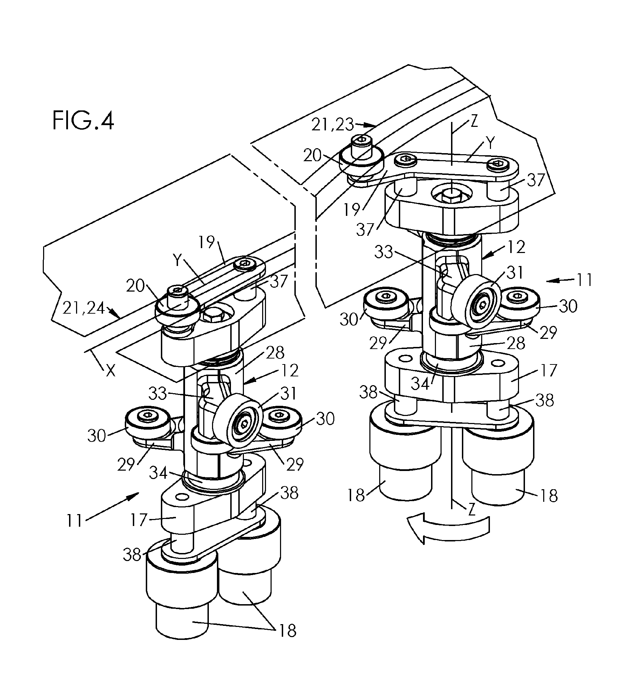

Le support **17** est monté mobile en rotation par rapport au chariot **12** autour de l'axe Z principal entre :
- une position droite, visible à gauche sur les figures 3 et 4, correspondant à la configuration déployée de la chaîne **8,** et dans laquelle l'axe Y d'orientation est colinéaire à la trajectoire X,
- et une position oblique, visible à droite sur les figures 3 et 4, correspondant à la position compactée de la chaîne **8** et dans laquelle l'axe Y d'orientation est incliné par rapport à sa position droite (et donc par rapport à la trajectoire X).

Selon un mode préféré de réalisation illustré sur la figure 4, le support **17** porte deux embouts **18** alignés sur le support suivant l'axe Y mobile pour la fixation amovible d'une préforme sur chaque embout **18** de manière déportée par rapport à l'axe Z central.

Le support **17** se présente de préférence sous forme d'un palonnier articulé autour de l'axe Z central et portant un embout **18** à chacune de ses extrémités diamétralement opposées par rapport à l'axe Z central.

Le maillon **11** comprend, en troisième lieu, un actionneur **19** couplé au support **17,** propre à entraîner celui-ci en rotation de sa position droite à sa position oblique, et réciproquement.

Selon un mode préféré de réalisation illustré sur les figures, l'actionneur **19** se présente sous forme d'un levier solidaire en rotation du support **17.** Ce levier **19** est monté articulé par rapport au chariot **12** entre :
- une position repliée (visible à gauche sur les figures 3 et 4) correspondant à la position droite du support **17,** et
- une position déportée (visible à droite sur les figures 3 et 4) correspondant à la position oblique du support **17.**

Ainsi qu'il est représenté en détail sur la figure 4, le levier **19** porte à une extrémité un suiveur **20** de came apte à coopérer avec un chemin **21** de came.

Selon un mode préféré de réalisation illustré sur les figures, le suiveur **20** de came est un galet, et le chemin **21** de came est formé par une rainure centrale pratiquée dans une plaque **22** surmontant la chaîne **8** le long du brin **3** aller (figures 1 à 4).

La section **7** opératoire du convoyeur **1** est définie par une chicane formée par le chemin **21** de came. Cette chicane **7** présente une section **23** d'entrée où le chemin **21** de came forme une déviation latérale depuis une section **24** amont rectiligne vers une section **25** intermédiaire rectiligne parallèle à la section **24** amont mais déportée latéralement par rapport à celle-ci, et une section **26** de sortie où le chemin **21** de came forme un retour de la section **25** intermédiaire rectiligne vers une section **27** aval rectiligne colinéaire à la section **24** amont.

En circulant dans la section **23** d'entrée, le galet **20** est dévié de la section **24** amont vers la section **25** intermédiaire. Le galet **20** entraîne ainsi progressivement le levier **19** de sa position droite vers sa position déportée, et par voie de conséquence le support **17** de sa position droite vers sa position oblique, comme indiqué par la flèche à droite sur la figure 4.

Le long de la section **25** intermédiaire, le levier **19** est maintenu en position déportée, et le support **17** dans sa position oblique correspondant à la configuration compactée de la chaîne **8.**

A l'inverse, dans la section de sortie, le galet **20** est dévié de la section intermédiaire vers la section aval. Le galet **20** entraîne ainsi le levier **19** de sa position déportée vers sa position droite, et par voie de conséquence le support **17** de sa position oblique vers sa position droite correspondant à la configuration étirée de la chaîne **8.**

Selon un mode préféré de réalisation, les roues **9, 10** sont synchronisées en position angulaire, de sorte à éviter tout blocage de la chaîne dans la section **7** opératoire. Cette synchronisation peut être réalisée de différentes manières. Une première technique consiste à motoriser la roue **9** amont, la roue aval **10** étant suiveuse. La synchronisation de la roue aval **10** sur la roue **9** amont s'effectue alors via le brin **4** retour. Une deuxième technique consiste à motoriser l'une des roues **9, 10** et à les accoupler au moyen d'une transmission (par exemple par courroie ou par chaîne). Une troisième technique consiste à motoriser les deux roues **9, 10** au moyen de moteurs électriques respectifs pilotés par une même unité de contrôle de telle sorte que ces moteurs (et donc les roues **9, 10)** soient synchronisés à chaque instant en position angulaire.

La synchronisation des roues **9, 10** en position angulaire permet d'équilibrer les efforts de compression exercés sur la chaîne **8** par la roue **9** amont dans la section **24** amont et les efforts de traction exercés sur la chaîne **8** dans la section **27** aval par la roue **10** aval. Cela minimise les risques d'arc-boutement de la chaîne dans la chicane **7** (c'est-à-dire dans la section opératoire), et permet un accostage progressif, sans à-coups, des maillons **11** les uns par rapport aux autres dans la section **25** intermédiaire.

Selon un mode de réalisation préféré illustré sur la figure 4, le chariot **12** comprend un corps **28** central dont font saillie deux bras **29** de guidage latéral. Chaque bras **29** porte, à une extrémité, un galet **30** de guidage latéral. Comme on le voit notamment sur la figure 5, les bras **29** sont diamétralement opposés et s'étendent obliquement par rapport à direction de défilement de la chaîne **8,** de sorte à assurer l'équilibrage dynamique du maillon **11** lors de son déplacement.

Par ailleurs, et comme montré sur les figures 1 et 5, chaque maillon **11** comprend de préférence des moyens de guidage vertical, en l'espèce sous forme de galets **31** coopérant avec une surface **32** support horizontale. Dans l'exemple illustré, cette surface **32** support est formée par des faces supérieures des rails **15, 16,** sur lesquelles s'appuient ces galets **31** de guidage vertical. Comme illustré sur la figure 5, les galets **31** sont portés par des bras **33** faisant saillie du corps **28.** Ces bras **33** sont avantageusement diamétralement opposés et s'étendent obliquement par rapport à la direction de défilement du maillon **11** (et en croix par rapport aux bras **29** de support des galets **30** de guidage latéral), aux fins d'équilibrage dynamique du maillon **11.** Selon un mode préféré de réalisation illustré sur les figures, et plus particulièrement sur les figures 4 et 6, les bras **33** portent également des galets **30** de guidage latéral, lesquels sont par conséquent, pour chaque maillon **11,** au nombre de quatre et assurent ainsi un blocage complet du chariot **12** en rotation le long du trajet X).

Pour permettre la rotation solidaire du levier **19** et du support **17,** chaque maillon **11** comprend, selon un mode particulier de réalisation, un arbre **34** central monté en rotation par rapport au corps **28** du chariot **12.** En pratique, l'arbre **34** central, qui s'étend suivant l'axe Z principal du chariot **12,** est monté en rotation dans un alésage pratiqué dans le corps **28.** Comme illustré sur la figure 4, le levier **19** est monté à une extrémité supérieure de l'arbre **34,** et le support **17** à une extrémité inférieure de l'arbre **34.** La fixation du levier **19** et du support **17** sur l'arbre **34** peut être réalisée par vissage.

Par ailleurs, le couplage de chaque maillon **11** à ses maillons **11** voisins peut être réalisé par l'intermédiaire de biellettes **35, 36** articulées. Ainsi qu'illustré sur la figure 3, chaque maillon est de préférence relié à chaque maillon adjacent par une paire de biellettes **35, 36,** à savoir une biellette **35** supérieure couplée au levier **19,** et une biellette **36** inférieure, identique à la biellette **35** supérieure, et couplée au support **17.**

Concrètement, chaque biellette **35, 36** est percée, à chacune de ses extrémités, d'un trou cylindrique emmanché sur un doigt **37, 38** solidaire de l'arbre **34** central, respectivement au niveau du levier **19** à l'extrémité supérieure de l'arbre **34,** et au niveau du support **17** à l'extrémité inférieure de l'arbre **34.**

Ainsi, en configuration étirée de la chaîne **8,** les supports **17** et les biellettes **35, 36** sont tous alignés, comme illustré à gauche sur les figures 3, 5 et 6, tandis qu'en configuration compactée de la chaîne **8,** les supports **17** et les biellettes **35, 6** s'étendent en accordéon, comme illustré à droite sur ces mêmes figures.

Afin de maintenir la chaîne **8** sous tension, il est possible de prévoir un réglage de l'entraxe entre les roues **9, 10.** Toutefois, selon un mode de réalisation préféré, illustré sur les figures 1 et 2, le convoyeur **1** est équipé d'un système de rattrapage de jeu sous forme d'une plaque **39** munie d'une rainure **40** définissant un chemin de came retour, essentiellement rectiligne avec lequel coopèrent les galets **20** des maillons **11** le long du brin **4** retour et présentant, à la sortie de la roue **10** aval, une chicane **41** locale de faible extension ayant pour fonction de diminuer localement l'écartement entre les maillons **11** et ainsi mettre la chaîne **8** sous tension.

Le convoyeur **1** fonctionne de la manière suivante.

Dans les retours **5, 6** (c'est-à-dire sur la périphérie des roues **9, 10),** le long du brin **3** retour, et jusqu'à la section **24** amont du brin **3** aller, la chaîne **8** s'étend dans sa configuration étirée, dans laquelle les embouts **18** portant les préformes **2** s'étendent dans l'alignement les uns des autres sur une rangée unique, et dans laquelle l'écartement entre les embouts **18** de deux maillons **11** successifs correspond à l'écartement **E1** maximal entre les préformes **2.**

Lorsque les maillons **11** parviennent à l'entrée de la section **7** opératoire, les leviers **19** sont déportés par la section **23** d'entrée du chemin **21** de came vers la section **25** intermédiaire, ce qui fait pivoter les supports **17** vers leur position oblique. Dans la section **25** intermédiaire, la chaîne **8** s'étend dans sa configuration compactée, dans laquelle les leviers **19** (avec les supports **17)** et les biellettes **35, 36** s'étendent en accordéon (à droite sur les figures 5 et 6), les embouts **18** portant les préformes **2** s'étendent en quinconce sur deux rangées parallèles, et l'écartement entre les embouts **18** de deux maillons **11** successifs correspond à l'écartement **E2** minimal entre les préformes **2.**

Lorsque les maillons **11** parviennent à la sortie de la section **7** opératoire, les leviers **19** sont replacés par la section **26** de sortie du chemin **21** de came dans leur position repliée, et la chaîne **8** retrouve sa configuration étirée lorsque les maillons **11** s'engagent dans la section **27** aval.

Comme on le voit bien sur les figures 3 à 6, l'orientation du chariot **12** est invariante. En particulier, l'orientation du chariot **12** est constante sur le brin **3** aller entre la section **24** amont et la section aval **27,** les pistes **13, 14** de guidage latéral demeurant planes tout le long du brin **3** aller. Seuls le levier **19** et le support **17** subissent une rotation qui assure le compactage de la chaîne **8** dans la section **25** intermédiaire.

Le convoyeur **1** qui vient d'être décrit présente les avantages suivants.

Premièrement, grâce au guidage latéral du maillon **11,** qui maintient le chariot **12** dans une orientation constante, les efforts que celui-ci exerce sur les pistes **13, 14** de guidage latéral sont sensiblement constants tout le long du brin aller, y compris dans la section **7** opératoire et en particulier le long de la section **23** d'entrée et de la section **26** sortie. En outre, cela permet de diminuer la masse mobile en rotation de chaque maillon **11,** et donc de réduire l'inertie de celui-ci.

Le mouvement de la chaîne **8** s'effectue par conséquent sans à-coups, et il est possible de la faire circuler à des vitesses importantes, ce qui autorise des cadences de production élevées, requises notamment par l'industrie de l'embouteillage, tout en améliorant la fiabilité générale du convoyeur **1** et en diminuant l'usure des pièces en contact.

Deuxièmement, grâce à la synchronisation des roues, le convoyeur présente une robustesse accrue, les risques d'arc-boutement de la chaîne **8** étant minimisés dans la chicane **7.**

Troisièmement, le convoyeur **8** présente une flexibilité accrue : il suffit en effet de modifier le profil du chemin **21** de came au niveau de la chicane **7** pour faire varier l'écartement **E2** mini et ainsi adapter le convoyeur **8** à d'autres tailles de préformes **2** correspondant à des récipients de capacité différente.

La description qui vient d'être faite d'un mode particulier de réalisation n'exclut pas des variantes de réalisation.

En particulier, l'actionneur **19** du maillon **11** pourrait prendre d'autres formes qu'un levier. Dans une première variante, l'actionneur pourrait ainsi se présenter sous forme d'une roue dentée engrenant localement une crémaillère en entrée et en sortie de la section **7** opératoire. Dans une deuxième variante, l'actionneur pourrait être un basculeur magnétique, le convoyeur **1** comprenant alors des électroaimants disposés convenablement pour faire basculer l'actionneur d'une position correspondant à la configuration étirée de la chaîne **8** à une position correspondant à la configuration compactée de celle-ci.

## Revendications

1. Convoyeur **(1)** d'articles **(2)** à chaîne **(8)** de transport déformable entre une configuration étirée pour le transport des articles **(2)** selon un premier écartement (E1), et une configuration compactée pour le transport des articles **(2)** selon un deuxième écartement (E2), la chaîne **(8)** étant formée d'une pluralité de maillons **(11)** articulés, ce convoyeur **(1)** étant **caractérisé en ce que** chaque maillon **(11)** comprend :
- un chariot **(12)** muni de moyens **(30)** de guidage latéral coopérant avec une piste **(13, 14)** définissant une trajectoire prédéterminée ;
- un support **(17)** définissant un axe (Y) d'orientation, ce support **(17)** étant monté mobile en rotation par rapport au chariot **(12)** autour d'un axe (Z) principal entre une position droite correspondant à la configuration étirée de la chaîne **(8),** et une position oblique, correspondant à la position compactée de la chaîne **(8)** et dans laquelle l'axe (Y) d'orientation est incliné par rapport à la position droite, le support **(17)** portant au moins un embout **(18)** pour la fixation amovible d'un article ;
- un actionneur **(19)** couplé au support **(17),** propre à entraîner celui-ci en rotation de sa position droite à sa position oblique, et réciproquement.

2. Convoyeur **(1)** selon la revendication 1, **caractérisé en ce que** l'actionneur **(19)** se présente sous forme d'un levier solidaire en rotation du support **(17),** ce levier **(19)** étant articulé par rapport au chariot **(12)** entre une position repliée correspondant à la position droite du support **(17),** et une position déportée correspondant à la position oblique du support **(17).**

3. Convoyeur **(1)** selon la revendication 2, **caractérisé en ce que** le levier **(19)** porte un suiveur **(20)** de came apte à coopérer avec un chemin **(21)** de came formant une chicane ayant une entrée **(23)** où le levier **(19)** est placé en position déportée, et une sortie **(26)** où le levier **(19)** est replacé en position repliée.

4. Convoyeur **(1)** selon l'une des revendications précédentes, **caractérisé en ce que** l'actionneur **(19)** est monté à une extrémité d'un arbre **(34)** central monté en rotation par rapport au chariot **(12),** et **en ce que** le support **(17)** est monté à une extrémité opposée de l'arbre **(34)** central.

5. Convoyeur **(1)** selon l'une des revendications précédentes, **caractérisé en ce que** chaque embout **(18)** est décalé par rapport à l'axe (Z) principal suivant l'axe d'orientation.

6. Convoyeur **(1)** selon l'une des revendications précédentes, **caractérisé en ce que** chaque maillon **(11)** est relié au maillon **(11)** adjacent par au moins une biellette **(35, 36).**

7. Convoyeur **(1)** selon l'une des revendications précédentes, **caractérisé en ce que** le chariot **(12)** comprend un corps **(28)** central, et **en ce que** les moyens de guidage latéral se présentent sous forme de galets **(30)** montés sur des bras **(29)** de guidage latéral faisant saillie du corps **(28).**

8. Convoyeur **(1)** selon la revendication 7, **caractérisé en ce que** le chariot **(12)** comprend deux bras **(29)** de guidage latéral diamétralement opposés.

9. Convoyeur selon l'une des revendications précédentes, **caractérisé en ce que** le support **(17)** porte au moins deux embouts **(18)** pour la fixation amovible d'un article **(2)** sur chaque embout **(18).**

10. Convoyeur **(1)** selon la revendication 9, **caractérisé en ce que** le support **(17)** se présente sous forme d'un palonnier portant un embout **(18)** à chacune de ses extrémités.

11. Convoyeur **(1)** selon l'une des revendications précédentes, **caractérisé en ce que** le chariot **(12)** est muni de moyens **(31)** de guidage vertical coopérant avec une surface (32) support.

12. Convoyeur **(1)** selon la revendication 11 , **caractérisé en ce que** le chariot **(12)** comprend un corps **(28)** central, et **en ce que** les moyens de guidage vertical se présentent sous forme de galets **(31)** montés sur des bras **(33)** de guidage vertical faisant saillie du corps **(28).**

13. Convoyeur **(1)** selon l'une des revendications précédentes, **caractérisé en ce qu'**il comprend une paire de roues **(9, 10)** d'entraînement sur lesquelles circule la chaîne **(8),** ces roues **(9, 10)** étant synchronisées en position angulaire.

## Patentansprüche

1. Förderer (1) von Artikeln (2) mit einer Förderkette (8), die zwischen einer gestreckten Konfiguration für den Transport der Artikel (2) gemäß einem ersten Abstand (E1) und einer kompakten Konfiguration für den Transport der Artikel (2) gemäß einem zweiten Abstand (E2) verformbar ist, wobei die Kette (8) aus mehreren Gelenkgliedern (11) gebildet ist, wobei dieser Förderer (1) **dadurch gekennzeichnet ist, dass** jedes Glied (11) Folgendes umfasst:
- einen Schlitten (12), der mit Mitteln (30) zur seitlichen Führung versehen ist, die mit einer Spur (13, 14) zusammenwirken, die eine vorbestimmte Bahn definiert,
- eine Stütze (17), die eine Ausrichtungsachse (Y) definiert, wobei diese Stütze (17) bezüglich des Schlittens (12) um eine Hauptachse (Z) zwischen einer geraden Position, die der gestreckten Konfiguration der Kette (8) entspricht, und einer schrägen Position, die der kompakten Konfiguration der Kette (8) entspricht und in der die Ausrichtungsachse (Y) bezüglich der geraden Position geneigt ist, drehbeweglich montiert ist, wobei die Stütze (17) mindestens ein Endstück (18) für die entfernbare Befestigung eines Artikels trägt,
- ein Stellglied (19), das an die Stütze (17) gekoppelt und geeignet ist, diese aus ihrer geraden Position in ihre schräge Position und umgekehrt rotierend anzutreiben.

2. Förderer (1) nach Anspruch 1, **dadurch gekennzeichnet, dass** das Stellglied (19) die Form eines drehfest mit der Stütze (17) verbundenen Hebels hat, wobei dieser Hebel (19) bezüglich des Schlittens (12) zwischen einer eingeklappten Position, die der geraden Position der Stütze (17) entspricht, und einer versetzten Position, die der schrägen Position der Stütze (17) entspricht, gelenkig ist.

3. Förderer (1) nach Anspruch 2, **dadurch gekennzeichnet, dass** der Hebel (19) einen Nockenfolger (20) trägt, der geeignet ist, mit einer Nockenbahn (21) zusammenzuwirken, die eine Prallfläche mit einem Eingang (23), wo der Hebel (19) in die versetzte Position platziert wird, und einem Ausgang (26), wo der Hebel (19) in die eingeklappte Position platziert wird, bildet.

4. Förderer (1) nach einem der vorhergehenden Ansprüche, **dadurch gekennzeichnet, dass** das Stellglied (19) an einem Ende einer mittleren Welle (34) montiert ist, die bezüglich des Schlittens (12) drehbar montiert ist, und dass die Stütze (17) an einem entgegengesetzten Ende der mittleren Welle (34) montiert ist.

5. Förderer (1) nach einem der vorhergehenden Ansprüche, **dadurch gekennzeichnet, dass** jedes Endstück (18) gemäß der Ausrichtungsachse bezüglich der Hauptachse (Z) versetzt ist.

6. Förderer (1) nach einem der vorhergehenden Ansprüche, **dadurch gekennzeichnet, dass** jedes Glied (11) über mindestens eine Schwinge (35, 36) mit dem benachbarten Glied (11) verbunden ist.

7. Förderer (1) nach einem der vorhergehenden Ansprüche, **dadurch gekennzeichnet, dass** der Schlitten (12) einen mittleren Körper (28) umfasst und dass die Mittel zur seitlichen Führung die Form von Laufrollen (30) haben, die an Armen (29) zur seitlichen Führung montiert sind, die vom Körper (28) vorragen.

8. Förderer (1) nach Anspruch 7, **dadurch gekennzeichnet, dass** der Schlitten (12) zwei sich diametral gegenüberliegende Arme (29) zur seitlichen Führung umfasst.

9. Förderer (1) nach einem der vorhergehenden Ansprüche, **dadurch gekennzeichnet, dass** die Stütze (17) mindestens zwei Endstücke (18) trägt, um einen Artikel (2) entfernbar an jedem Endstück (18) zu befestigen.

10. Förderer (1) nach Anspruch 9, **dadurch gekennzeichnet, dass** die Stütze (17) die Form einer Traverse hat, die an jedem ihrer Enden ein Endstück (18) trägt.

11. Förderer (1) nach einem der vorhergehenden Ansprüche, **dadurch gekennzeichnet, dass** der Schlitten (12) mit Mitteln (31) zur vertikalen Führung versehen ist, die mit einer Stützfläche (32) zusammenwirken.

12. Förderer (1) nach Anspruch 11, **dadurch gekennzeichnet, dass** der Schlitten (12) einen mittleren Körper (28) umfasst und dass die Mittel zur vertikalen Führung die Form von Laufrollen (31) haben, die an Armen (33) zur vertikalen Führung montiert sind, die vom Körper (28) vorragen.

13. Förderer (1) nach einem der vorhergehenden Ansprüche, **dadurch gekennzeichnet, dass** er ein Paar Antriebsräder (9, 10) umfasst, auf denen die Kette (8) umläuft und die in Winkelposition synchronisiert sind.

## Claims

1. Conveyor **(1)** for articles **(2)** with a transporting chain **(8)** which can be deformed between a stretched configuration for transporting articles **(2)** with a first spacing (E1), and a compacted configuration for transporting articles **(2)** with a second spacing (E2), the chain **(8)** being formed from a plurality of articulated links **(11),** this conveyor **(1)** being **characterized in that** each link **(11)** comprises:
- a trolley **(12)** provided with lateral guide means **(30)** cooperating with a track **(13, 14)** defining a predetermined path;
- a support **(17)** defining an axis (Y) of orientation, this support **(17)** being mounted rotatably with respect to the trolley **(12)** about a main axis (Z) between a straight position corresponding to the stretched configuration of the chain **(8),** and an oblique position, corresponding to the compacted position of the chain **(8)** and in which the axis (Y) of orientation is inclined with respect to the straight position, the support **(17)** bearing at least one end-piece **(18)** for the removable fastening of an article;
- an actuator **(19)** coupled to the support **(17)** and suitable for rotating the latter from its straight position to its oblique position and vice versa.

2. Conveyor **(1)** according to Claim 1, **characterized in that** the actuator **(19)** takes the form of a lever coupled in rotation to the support **(17),** this lever **(19)** being articulated with respect to the trolley **(12)** between a withdrawn position corresponding to the straight position of the support **(17)** and an offset position corresponding to the oblique position of the support **(17).**

3. Conveyor **(1)** according to Claim 2, **characterized in that** the lever **(19)** bears a cam follower **(20)** able to cooperate with a cam track **(21)** forming a chicane having an inlet **(23)** where the lever **(19)** is placed in the offset position, and an outlet **(26)** where the lever **(19)** is returned to the withdrawn position.

4. Conveyor **(1)** according to one of the preceding claims, **characterized in that** the actuator **(19)** is mounted at one end of a central shaft **(34)** mounted rotatably with respect to the trolley **(12)** and **in that** the support **(17)** is mounted at an opposite end of the central shaft **(34).**

5. Conveyor **(1)** according to one of the preceding claims, **characterized in that** each end-piece **(18)** is offset with respect to the main axis (Z) along the axis of orientation.

6. Conveyor **(1)** according to one of the preceding claims, **characterized in that** each link **(11)** is connected to the adjacent link **(11)** by at least,one connecting rod **(35, 36).**

7. Conveyor **(1)** according to one of the preceding claims, **characterized in that** the trolley **(12)** comprises a central body **(28),** and **in that** the lateral guide means take the form of rollers **(30)** mounted on lateral guide arms **(29)** projecting from the body **(28).**

8. Conveyor **(1)** according to Claim 7, **characterized in that** the trolley **(12)** comprises two diametrically opposed lateral guide arms **(29).**

9. Conveyor according to one of the preceding claims, **characterized in that** the support **(17)** bears at least two end-pieces **(18)** for the removable fastening of an article **(2)** to each end-piece **(18).**

10. Conveyor **(1)** according to Claim 9, **characterized in that** the support **(17)** takes the form of a crossbar bearing an end-piece **(18)** at each of its ends.

11. Conveyor **(1)** according to one of the preceding claims, **characterized in that** the trolley **(12)** is provided with vertical guide means **(31)** cooperating with a support surface **(32).**

12. Conveyor **(1)** according to Claim 11, **characterized in that** the trolley **(12)** comprises a central body **(28),** and **in that** the vertical guide means take the form of rollers **(31)** mounted on vertical guide arms **(33)** projecting from the body **(28).**

13. Conveyor **(1)** according to one of the preceding claims, **characterized in that** it comprises a pair of drive wheels,(**9, 10)** on which the chain **(8)** circulates, these wheels **(9, 10)** being synchronized in angular position.
